# EUROPEAN PATENT APPLICATION

(11) **EP 2 701 079 A1**
(43) Date of publication of application: **26.02.2014**
(21) Application number: 12774535.4
(22) Date of filing: 12.04.2012
(51) Int. Cl.: G06F 17/30, G06F 3/048

(54) **INFORMATION PROCESSING DEVICE, INFORMATION PROCESSING METHOD, AND PROGRAM**

(30) Priority: 20.04.2011 JP 2011094457
(71) Applicant: Sony Corporation, Tokyo 108-0075 (JP)
(72) Inventor: ASANO Tamaki, Tokyo 108-0075 (JP); KORI Takayuki, Tokyo 108-0075 (JP); SHOJI Yuki, Tokyo 108-0075 (JP)
(74) Representative: Jackson, Jonathan Andrew
(86) International application number: PCT/JP2012/059959
(87) International publication number: WO 2012/144397

(57) **Abstract**

Disclosed are an information processing apparatus, an information processing method, and a program capable of easily classifying contents as a processing target in reproduction and the like. For example, a screen is displayed by arranging a (thumbnail of a) cover art as a symbol image serving as a symbol representing a content such as a song on a 2-dimensional plane, and a carpet area which is a band-shaped area having a width extending, for example, in an x-direction as a direction perpendicular to a predetermined axis of the 2-dimensional plane is displayed. The content whose symbol image is included in the carpet area is regarded as a processing target in a predetermined process. The present technology may be applied to, for example, a case where a song to be registered in a playlist is classified from contents such as songs.

## Description

### TECHNICAL FIELD

The present technology relates to an information processing apparatus, an information processing method, and a program, and more particularly, to an information processing apparatus, an information processing method, and a program capable of easily classifying, for example, contents serving as a processing target in reproduction and the like.

### BACKGROUND ART

In recent years, as a recording medium such as a memory and a hard disk is miniaturized, and a capacity thereof increases, a plurality of songs (contents) are stored in an information terminal such as a mobile terminal capable of reproducing a content such as a song.

However, a song desired by a user may change depending on an occasional feeling, a particular period of time, and the like.

In this case, if a playlist where songs (including a song on a single and an album) are registered is created by classifying songs according to a tune or a genre (such as rock or jazz), a user can hear a desired song by selecting a playlist (where songs are registered) matching an occasional feeling and the like.

However, if a work of searching a desired song out of a plurality of songs stored in an information terminal and registering the desired song in a playlist is manually performed by a user, it would be cumbersome.

In this regard, as an application for managing songs, for example, there has been discussed a channel type application in which a song is selected depending on a tune and the like and is classified into a group called a channel.

In the channel type application, if icons representing each channel are displayed, and a user selects an icon corresponding to a desired channel, a song classified into the corresponding channel is reproduced.

In addition, in order to recommend a content full of variety, there has been discussed an information processing apparatus capable of recommending a song depending on metadata selected by a user (for example, refer to Patent Document 1).

### CITATION LIST

### PATENT DOCUMENT

Patent Document 1: JP 2008-165759 A

### SUMMARY OF THE INVENTION

### PROBLEMS TO BE SOLVED BY THE INVENTION

In the channel type application, it is difficult for a user to directly assign a condition of a song classified into a certain channel.

For this reason, even when a user imagines that a desired song is classified into a certain channel and selects an icon of the corresponding channel, the desired song may not be classified into the corresponding channel and may not be reproduced in some cases.

### SOLUTIONS TO PROBLEMS

In view of the aforementioned problems, the present technology provides an information processing apparatus, an information processing method, and a program capable of easily classifying a content as a processing target in reproduction and the like.

According to an aspect of the present technology, there is provided an information processing apparatus or a program that causes a computer to function as an information processing apparatus, the information processing apparatus including a display control unit that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane, wherein a content whose symbol image is included in the carpet area is regarded as a processing target of a predetermined process.

According to an aspect of the present technology, there is provided an information processing apparatus including a display control unit that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane, wherein a content whose symbol image is included in the carpet area is regarded as a processing target of a predetermined process.

According to an aspect of the present technology, a screen is displayed such that a symbol image serving as a symbol representing a content is arranged on a 2-dimensional plane, and a carpet area which is a band-shaped area having a width extending in a direction perpendicular to a predetermined axis of the 2-dimensional plane is displayed. The content whose symbol image is included in the carpet area is regarded as a processing target of a predetermined process.

In addition, the information processing apparatus may be an independent apparatus or an internal block included in a single apparatus.

Furthermore, the program may be transmitted via a transmission medium or may be recorded in a recording medium.

### EFFECTS OF THE INVENTION

According to an aspect of the present technology, it is possible to easily classify a content as a processing target in reproduction and the like.

### BRIEF DESCRIPTION OF DRAWINGS

Fig. 1 is a perspective view illustrating an exemplary exterior configuration of a tablet device according to an embodiment obtained by applying an information processing apparatus according to the present technology.
Figs. 2A and 2B are perspective views illustrating another exemplary exterior configuration of a tablet device according to an embodiment obtained by applying the information processing apparatus according to the present technology.
Fig. 3 is a block diagram illustrating an exemplary hardware configuration of the tablet device according to an embodiment obtained by applying the information processing apparatus according to the present technology.
Fig. 4 is a diagram illustrating a screen display example of a touch screen 101 using a management application.
Fig. 5 is a diagram illustrating a screen display example of a touch screen 101 using a management application.
Fig. 6 is a diagram illustrating a screen display example of a touch screen 101 using a management application.
Fig. 7 is a diagram illustrating a screen display example of a touch screen 101 using a management application.
Fig. 8 is a block diagram illustrating an exemplary functional configuration of a content management system.
Fig. 9 is a diagram illustrating a display example of a pane 211 of a cover art view in an easy mode.
Fig. 10 is a flowchart illustrating a process in the easy mode.

### MODE FOR CARRYING OUT THE INVENTION

### <Embodiment of Tablet Device Obtained by Applying Present Technology>

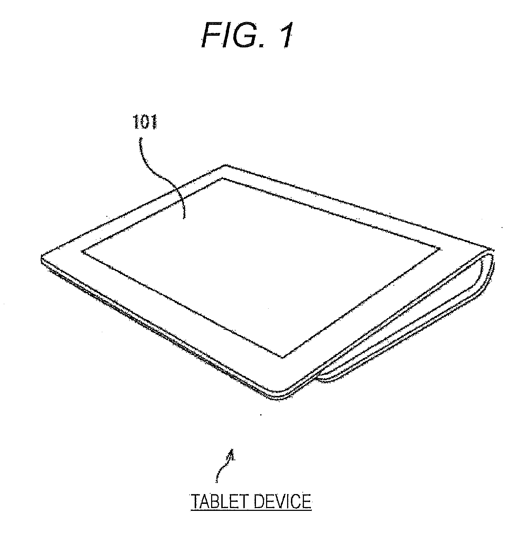

Fig. 1 is a perspective view illustrating an exemplary exterior configuration of a tablet device according to an embodiment obtained by applying an information processing apparatus according to the present technology.

Referring to Fig. 1, the tablet device has an approximately rectangular shape, and a touch screen 101 is provided on one surface of the rectangular shape.

In Fig. 1, a thickness of the tablet device is tapered such that the thickness of the near side of Fig. 1 is thin, and the thickness of the far side is thick.

Therefore, when the tablet device of Fig. 1 is placed on a flat place such as table while the thin thickness portion faces the near side, the touch screen 101 is inclined to the near side on the table so as to allow a user to easily see the touch screen 101.

Various images are displayed on the touch screen 101. In addition, various inputs (operation) can be made by placing a finger near the touch screen 101 or touching the touch screen 101 with a finger.

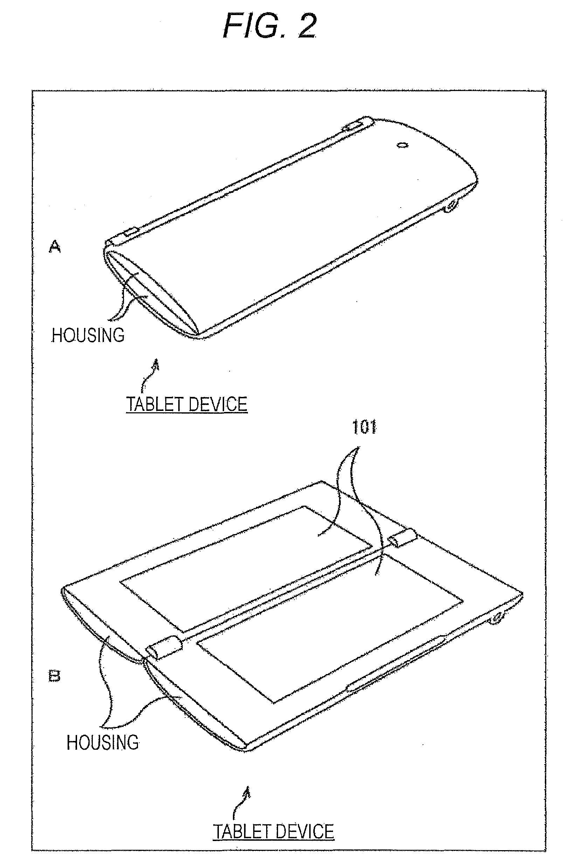

Figs. 2A and 2B are perspective views illustrating an exemplary exterior configuration of the tablet device according to an embodiment obtained by applying the information processing apparatus according to the present technology.

Referring to Figs. 2A and 2B, the tablet device includes a pair of housings, each of which has a rectangular surface having an arch-shaped bulging portion. A pair of housings are connected to each other openably/closably with respect to one side of a longitudinal direction of the rectangular shape.

Fig. 2A illustrates a state that a pair of housings of the tablet device are closed, and Fig. 2B illustrates a state that a pair of housings of the tablet device are opened.

In the tablet device of Figs. 2A and 2B, the touch screen 101 is provided on a plane opposite to the surface of the arch-shaped bulging portion of a pair of housings as illustrated in Fig. 2B. Therefore, a pair of touch screens 101 (dual-view touch screen) are provided in the tablet device of Figs. 2A and 2B.

If a pair of housings are closed as illustrated in Fig. 2A, the surfaces of the touch screens 101 of a pair of housings face each other.

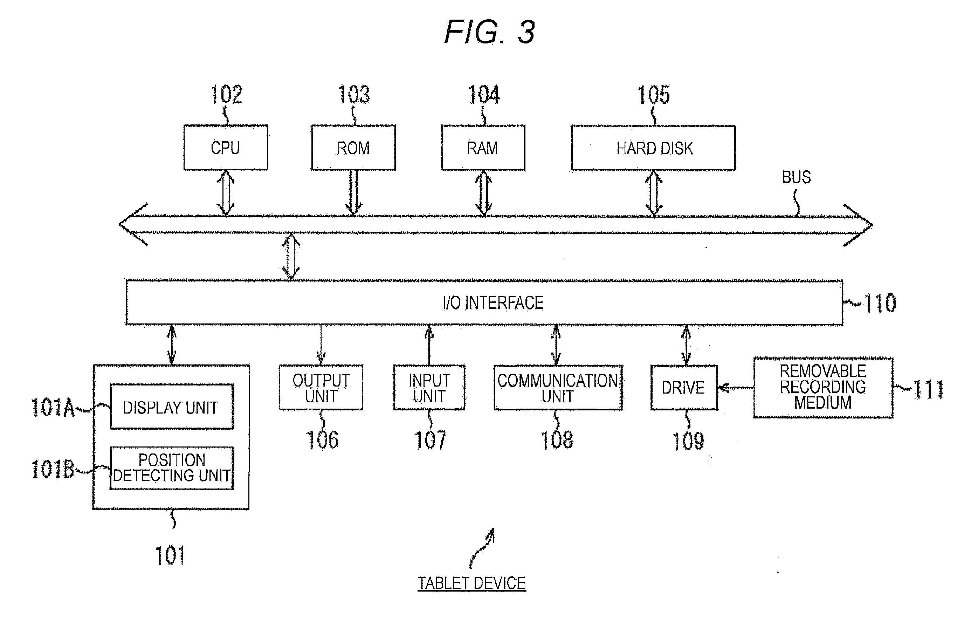

Fig. 3 is a block diagram illustrating an exemplary hardware configuration of the tablet device according to an embodiment obtained by applying the information processing apparatus according to the present technology.

Referring to Fig. 3, the tablet device includes a touch screen 101, a CPU (Central Processing Unit) 102, a ROM (Read-Only Memory) 103, a RAM (Random Access Memory) 104, a hard disk 105, an output unit 106, an input unit 107, a communication unit 108, a drive 109, an I/O interface 110, and a removable recording medium 111.

The CPU 102, the ROM 103, the RAM 104, the hard disk 105, and the I/O interface 110 are connected to each other via a bus. The CPU 102, the ROM 103, the RAM 104, the hard disk 105, and the I/O interface 110 (or devices connected thereto) can exchange data with each other via a bus.

Referring to Fig. 3, the I/O interface 110 is connected to the touch screen 101, the output unit 106, the input unit 107, the communication unit 108, and the drive 109.

The touch screen 101 has a display unit 101A and a position detecting unit 101B. As described in conjunction with Fig. 1, various images can be displayed, and an operation can be input by placing a finger near the touch screen 101 or touching the touch screen 101 with a finger.

That is, the display unit 101A includes a device (or display unit) such as a liquid crystal panel capable of displaying an image and displays an image based on data supplied through the I/O interface 110.

The position detecting unit 101B includes a device capable of receiving (detecting) an input (approach or touch) from the outside such as an electrostatic touch panel or a set of a light source that irradiates light and a sensor that receives reflection light from an object.

If an object from the outside such as a user's finger or a touch pen operated by a user approaches or makes contact with (touches) the touch screen 101, the position detecting unit 101B outputs a positional signal representing a position of the approach or touch (to the I/O interface 110).

The touch screen 101 has a single body obtained by integrating the display unit 101A and the position detecting unit 101B described above, so that an image can be displayed on the display unit 101B, and an operation input (touch or approach) from the outside to the image displayed on the display unit 101B can be received by the position detecting unit 101B.

The positional signal output by the position detecting unit 101B is supplied to the CPU 102 via the I/O interface 110. The CPU 102 recognizes which the operation input has been made based on the positional signal from the position detecting unit 101B and performs various processes depending on the operation input.

In addition, the (position detecting unit 101B of the) touch screen 101 is set to be capable of detecting touches of a plurality of fingers (such as two fingers). As a result, a user is allowed to perform a multi-touch operation.

The multi-touch operation may include, for example, a pinch-out gesture in which a pair of fingers pinch open while a pair of fingers touch the surface of the touch screen 101 or a pinch-in gesture in which a pair of fingers pinch close.

The pinch gestures (pinch-out or pinch-in gestures) are performed to zoom in or out an image, widen or narrow an area, and the like.

The CPU 102 performs various processes by executing a program stored in the ROM 103 or a program read from the hard disk 105 and the like and stored (deployed) in the RAM 104.

The ROM 103 includes, for example, an EEPROM (Electrically Erasable Programmable ROM) and the like and stores data or programs necessary to be stored even when the tablet device is powered off.

The RAM 104 stores programs or data necessary in operation of the CPU 102.

The hard disk 105 stores programs executed by the CPU 102, data on a content such as a song (including a song on a single and an album), metadata of the content, and other data (including a program).

The output unit 106 includes, for example, a loudspeaker, an earphone terminal, and the like and outputs sound (data).

The input unit 107 includes, for example, a microphone or a microphone terminal, a voice recognition device, and the like and receives a sound (data) input.

The communication unit 108 includes, for example, a communication interface such as a LAN (Local Area Network) and controls communication with external devices in a wired/wireless manner.

In the drive 109, a removable recording medium 111 including an optical disc such as a DVD (Digital Versatile Disc) or a semiconductor memory such as a USB memory can be removably installed.

The drive 109 drives the removable recording medium 111 installed therein so that data are written to or read from the removable recording medium 111.

The I/O interface 110 serves as an interface for connecting various devices to the tablet device. In Fig. 3, while the touch screen 101, the output unit 106, the input unit 107, the communication unit 108, and the drive 109 are connected to the I/O interface 110 as described above, other devices can also be connected to the I/O interface 110.

In the tablet device configured as described above, (data on) a song as a content and metadata are downloaded on the hard disk 105. In addition, a (program of) management application for managing songs is installed in the hard disk 105.

The CPU 102 performs various processes by executing the management application installed in the hard disk 105.

The management application may be installed in the hard disk 105 in advance.

The management application may be stored (recorded) in the removable recording medium 111 and may be installed in the tablet device from the removable recording medium 111. Such a removable recording medium 111 may be provided as so-called package software.

The management application may be installed in the tablet device from the removable recording medium 111. Alternatively, the management application may be downloaded to the tablet device via a communication network or a broadcast network and be installed in the hard disk 105. That is, the management applicationmaybe transmittedto the tablet device, for example, from a download website via a digital broadcast satellite in a wireless manner or may be transmitted to the tablet device via a network such as a LAN or the Internet in a wired manner.

Similar to the management application, data (and metadata) on songs may be downloaded to the hard disk 105 from a removable recording medium 111, a download website, and the like.

### <Screen Display Example Using Management Application>

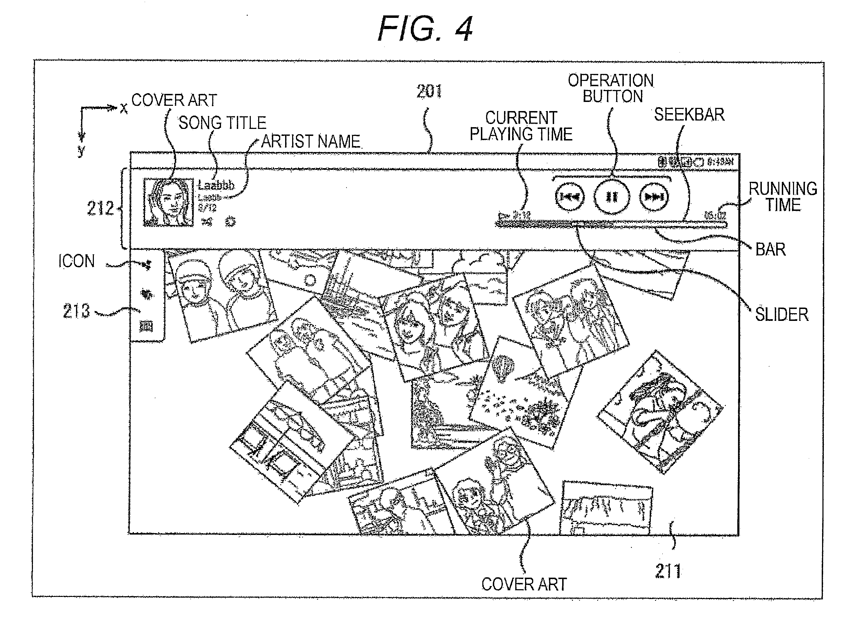

Figs. 4 to 7 are diagrams illustrating screen display examples of (the display unit 101A of) the touch screen 101 using the management application (executed by the CPU 102).

Fig. 4 is a diagram illustrating a display example of an initial screen when the management application starts to operate.

As the management application starts to operate, a window 201 is displayed.

Referring to Fig. 4, the window 201 has three panes 211, 212, and 213.

In Fig. 4, the pane 211 is an area occupying approximately 3/4 of the window 201 in the lower part. The pane 212 is an area occupying approximately 1/4 of the window 201 in the upper part. In addition, the pane 213 is an area occupying a part of the window 201 in the left end and overlapping with the pane 211.

In the initial screen, on the pane 211, a screen obtained by arranging (thumbnails of) cover arts (jackets) of CDs (Compact Discs), as a symbol image serving as a symbol representing an album, on a 2-dimensional plane in a spreading-apart manner is displayed such that CDs as albums recorded in the hard disk 105 are randomly scattered on a table.

In a case where it is difficult to display overall cover arts of the albums recorded in the hard disk 105 on the pane 211, a flick gesture is performed by lightly sweeping a surface with a finger, so that the pane 211 is displayed such that scrolling (vertical scrolling) in an y-direction as a vertical direction can be performed. As the pane 211 is scrolled, cover arts that are not displayed before scrolling are displayed on the pane 211.

Here, in the initial screen, the cover arts are arranged on a virtual 2-dimensional plane (hereinafter, referred to as a virtual plane) having the same width as that of the pane 211.

In addition, in the pane 211, an area having the same size as that of the pane 211 on the virtual plane is displayed on the pane 211 as a display area. The scrolling of (the display of) the pane 211 can be implemented by moving the display area in the y-direction as a vertical direction of the virtual plane.

In the pane 211, by reducing the size of the cover art, it is possible to display overall cover arts of the albums recorded in the hard disk 105 without scrolling. However, in this case, it may be difficult to see and operate the covers arts.

Therefore, in a case where the number of the albums recorded in the hard disk 105 is large, it is desirable to scrollably display the pane 211 in order to allow the cover arts to be displayed in an easily recognizable size.

For the cover arts displayed on the pane 211, a tap gesture may be made by lightly tapping a surface just once with a finger, or a double tap gesture may be made by tapping a surface twice. As a tap gesture (or double tap gesture) is made for the cover art, the management application starts to reproduce the album corresponding to the tapped cover art.

The (data on the) cover art are recorded in the hard disk 105 as metadata of the album.

On the pane 212, for example, there are displayed a cover art of the currently playing song (album), a song title, and an artist name.

On the pane 212, for example, there are displayed a skip button operated (touched) when skipping to a start of the currently playing song or a start of the next song or is made, or a pause button operated to pause in middle of the song.

In addition, on the pane 212, a seekbar is displayed. The seekbar includes a bar representing the entire currently playing song and a slider representing a current playing position of the playing song. The slider moves along the bar depending on the current playing position.

The slider may move along the bar by a drag gesture. In this manner, the reproduction position can change by dragging the slider.

In addition, in the (position close to the) seekbar, there are displayed a running time of the entire currently playing song and a current playing time as a time point corresponding the current playing position with respect to the start (0) of the song.

A menu is displayed on the pane 213.

In the management application, a shortcut view and a detail view can be made on the pane 213. Switching between the detail view and the shortcut view on the pane 213 is performed as necessary.

In Fig. 4, in order to suppress hindrance of the display of the cover art on the pane 211 by the pane 213 to the minimum, the shortcut view is made on the pane 213.

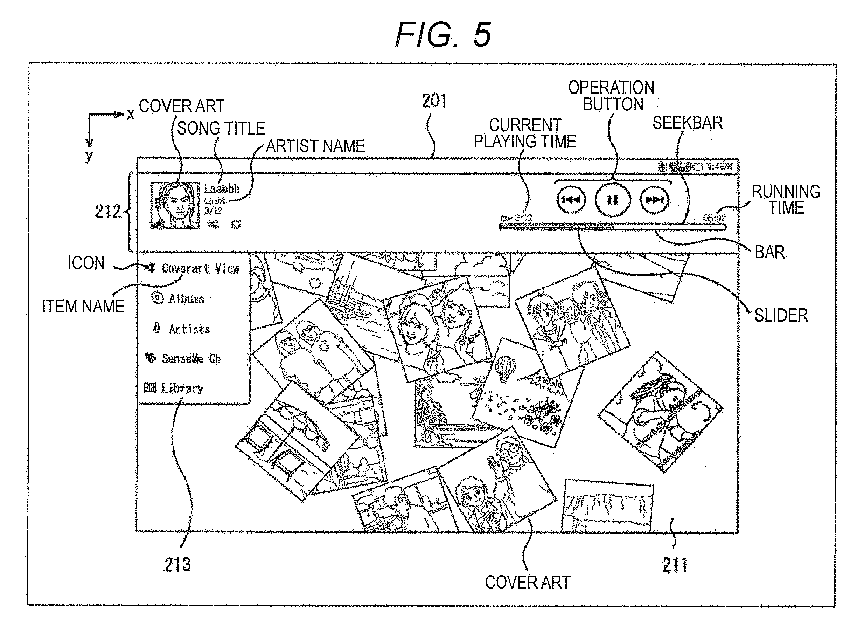

Fig. 5 is a diagram illustrating a display example of the initial screen when the detail view is made on the pane 213.

For example, if a touch is made in the shortcut view on the pane 213, the management application may switch the display on the pane 213 from the shortcut view to the detail view in order to facilitate a user's touch.

In the detail view on the pane 213, an icon representing menu items and item names ("Coverart View" and the like in Fig. 5) are displayed.

Here, the menu items on the pane 213 are displayed in a layered manner. In Fig. 5, for example, the item (tile) "Coverart View" is the uppermost layer item, and the items "Albums" and "Artists" displayed thereunder are lower layer items under the item "Coverart View."

In addition, the item "Coverart View," as a display (view) for the songs recorded on the hard disk 105, is an item for selecting a view that displays a screen where the cover arts are arranged on a 2-dimensional plane in a spreading-apart manner as on the pane 211 illustrated in Figs. 4 and 5. In the management application, a view of the item "Coverart View" is selected at the time of the start of operation.

Therefore, the initial screen as a screen when the management application starts to operate in Fig. 4 (and Fig. 5) is set to a view of the item "Coverart View" (hereinafter, referred to as a "cover art view").

The lower layer items "Albums" and "Artists" under the item "Coverart View" are items for selecting a sort key for sorting the cover arts displayed in the cover art view.

That is, if the lower layer item "Albums" under the item "Coverart View" is touched, the albums are sorted by using the album name as a sort key in the management application.

In the management application, a cover art is arranged in a y-directional position on the virtual plane corresponding to a sort order of the sorting in which the album name is used as a sort key. As a result, the cover arts are displayed on the pane 211 on an album name basis along the y-direction (vertical direction).

In addition, if the lower layer item "Artists" under the item"CoverartView" is touched, the management application sorts the albums by using an artist name as a sort key.

In the management application, a cover art is arranged in a y-directional position on the virtual plane corresponding to a sort order of the sorting in which the artist name is used as a sort key. As a result, the cover arts are displayed on the pane 211 on an artist name basis along the y-direction.

The x-directional position of the cover art arranged on the virtual plane may be set to a random position, a position corresponding to a sort order of the sorting in which items other than the album name and the artist name are used as a sort key, and the like.

The arrangement position (coordinates) on the virtual plane where the cover art is arranged may be randomly deviated by a slight distance from a position corresponding to the sort order. In addition, the cover art may be arranged on the virtual plane by rotating only by a random angle. In this manner, the cover arts can be displayed on the pane 211 such that CDs of the albums are randomly scattered on a table.

If an operation on the (menu of the) pane 213 is not input for a predetermined time, the management application returns the display on the pane 213 to the shortcut view of Fig. 4 from the detail view of Fig. 5.

In the shortcut view on the pane 213, icons of the uppermost layer items of the menu are displayed in order to save a display space as illustrated in Fig. 4.

The uppermost layer items of the menu displayed on the pane 213 include the items "Coverart View" and "Library" and the like as illustrated in Fig. 5.

The item "Library" is an item for selecting a view (screen) that displays information on songs (albums) in a list format on the pane 211 as a display (view) for the songs (albums) stored in the hard disk 105.

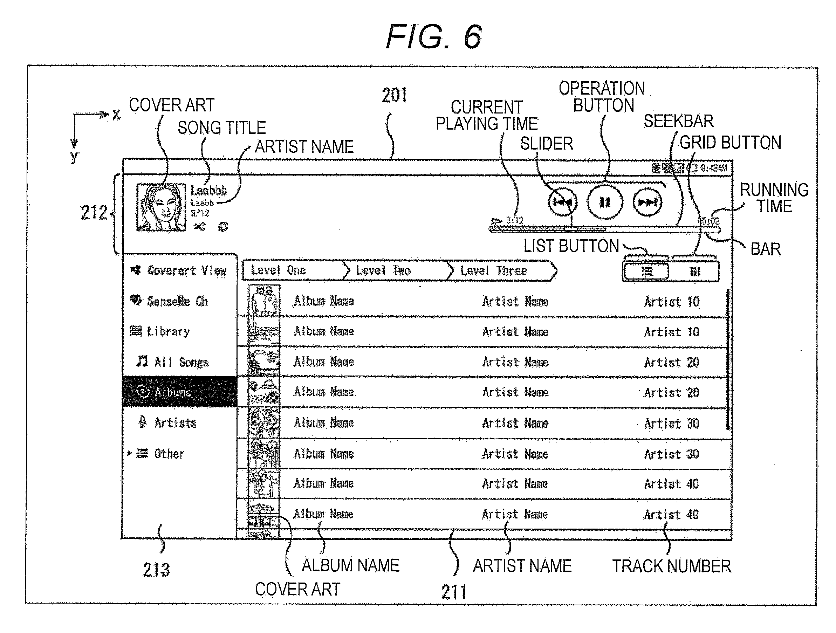

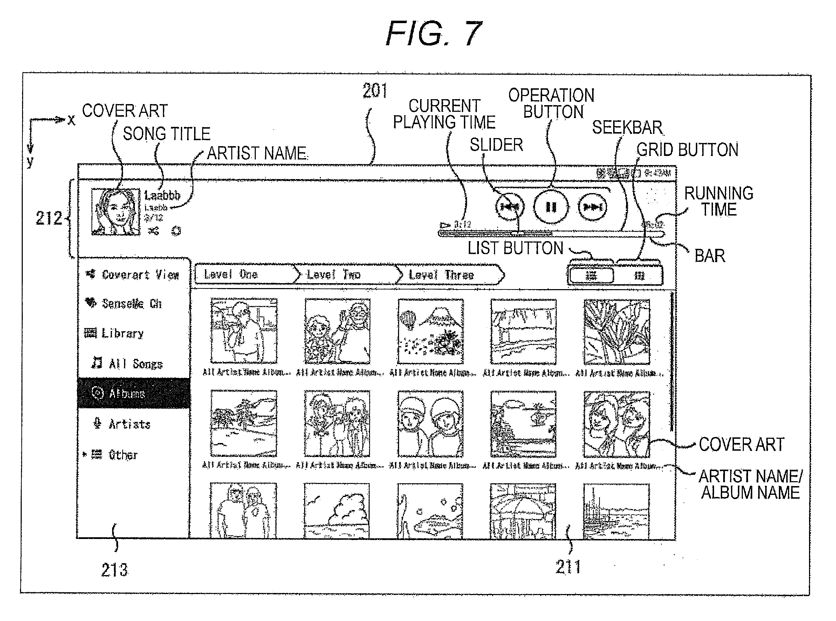

Figs. 6 and 7 are diagrams illustrating a display example of a view (hereinafter, referred to as a library view) that displays information on songs in a list format displayed when the item "Library" displayed on the pane 213 is tapped.

As the item "Library" is tapped, (icons and item names of) the lower layer items "All Songs," "Albums," and "Artists" under the item "Library" are displayed under the item name of the item "Library" on the pane 213.

In the library view, information on the (songs of) albums is displayed on the pane 211 in a list (table) format or a grid format.

In the library view, the display can switch between the list format and the grid format. For this reason, on the pane 212, a list button and a grid button are displayed in addition to the cover art view (Figs. 4 and 5).

In Figs. 6 and 7, the list button and the grid button are displayed under the seekbar.

If the list button is tapped in the library view, the display on the pane 211 switches to the list format. If the grid button is tapped, the display of the pane 211 switches to the grid format.

Fig. 6 illustrates a display example of the library view when the pane 211 is displayed in the list format.

In the library view of the list format, a single visualization entity includes the cover art, the album name (Album Name), the artist name (Artist Name), and the number of tracks of the album (number of songs), and the like. The visualization entities are displayed on the pane 211 in the list format.

Fig. 7 illustrates a display example of the library view when the pane 211 is displayed in the grid format.

In the library view of the grid format, a single visualization entity includes, for example, a cover art of an album, and the album name and the artist name displayed thereunder. The visualization entity is displayed in a grid format on the pane 211.

In the library view, similar to the cover art view, as the visualization entity is tapped, the management application starts reproduction of the album corresponding to the tapped visualization entity.

In the library view, similar to the cover art view, if it is difficult to display the visualization entities of overall albums recorded in the hard disk 105 on the pane 211, the pane 211 is displayed such that a vertical scroll can be made by a flick gesture.

In the library view of Figs. 6 and 7, the lower layer item "Albums" under the item "Library" is selected (touched) . As a result, similar to a case where the lower layer item "Albums" under the item "Coverart View" is touched as described in conjunction with Fig. 5, the management application sorts the visualization entities by using the album name as a sort key so as to display the albums on the album name basis on the pane 211.

### <Configuration Example of Content Management System>

The tablet device of Fig. 3 serves as a content management system that manages albums (songs) as the content by causing the CPU 102 to execute a management application (program).

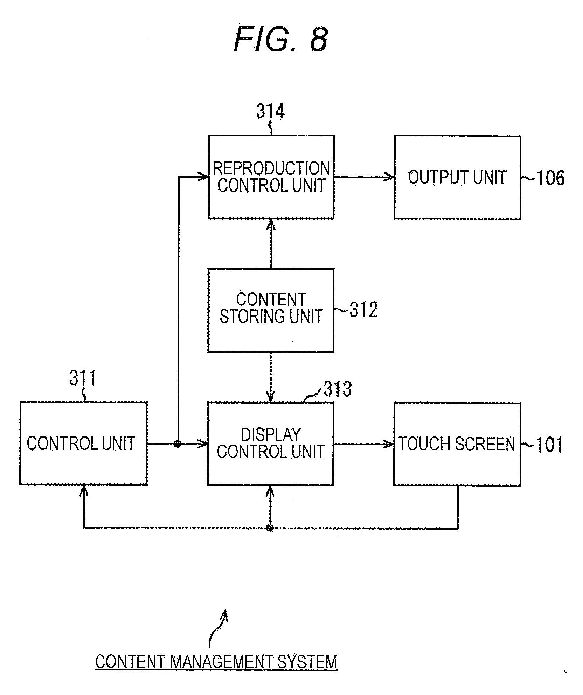

Fig. 8 is a block diagram illustrating a functional configuration example of the content management system.

In Fig. 8, like reference numerals denote like elements as in Fig. 3.

The content management system includes a touch screen 101, an output unit 106, a control unit 311, a content storing unit 312, a display control unit 313, and a reproduction control unit 314.

The control unit 311 receives an operation input for the touch screen 101 from the touch screen 101.

The control unit 311 controls each block such as a reproduction control unit 314 or a display control unit 313 included in the content management system in response to the operation input for the touch screen 101 and the like.

The content storing unit 312 stores (data on songs of) albums as the content, metadata on albums, and the like.

Here, the metadata of the album includes an album name, an artist name, a release date (year, month, and day of the album release), a (thumbnail of a) cover art as a symbol image serving as a symbol representing an album, and the like.

The display control unit 313 is supplied with the operation input for the touch screen 101 from the touch screen 101.

The display control unit 313 performs display control for displaying information on albums stored in the content storing unit 312 and the like on the touch screen 101 in response to the control from the control unit 311 or the operation input to the touch screen 101.

The reproduction control unit 314 performs reproduction control for outputting (songs of) the albums stored in the content storing unit 312 from the output unit 106 such as a loudspeaker and the like in response to the control from the control unit 311.

In the content management system configured as described above, the display control unit 313 displays the cover art view or the library view described in conjunction with Figs. 4 to 7 on the touch screen 101 in response to the operation input to the touch screen 101.

However, the content management system of Fig. 8 may cause the control unit 311 to create a playlist where albums (or singles) selected by a user from the cover art view or the library view displayed on the touch screen 101 are registered and cause the reproduction control unit 314 to sequentially reproduce songs (of albums) registered in the playlist.

In the content management system, the albums registered in the playlist may be selected by a user one by one in order to create the playlist. However, if a user selects the albums registered in the playlist one by one, it would be a cumbersome work.

In this regard, as a playlist creation mode, the content management system is provided with an easy mode in which the playlist is created with a simple and easy operation in addition to a one-by-one mode in which the albums registered in the playlist are selected one by one.

In the easy mode, the cover art view (Figs. 4 and 5) is displayed.

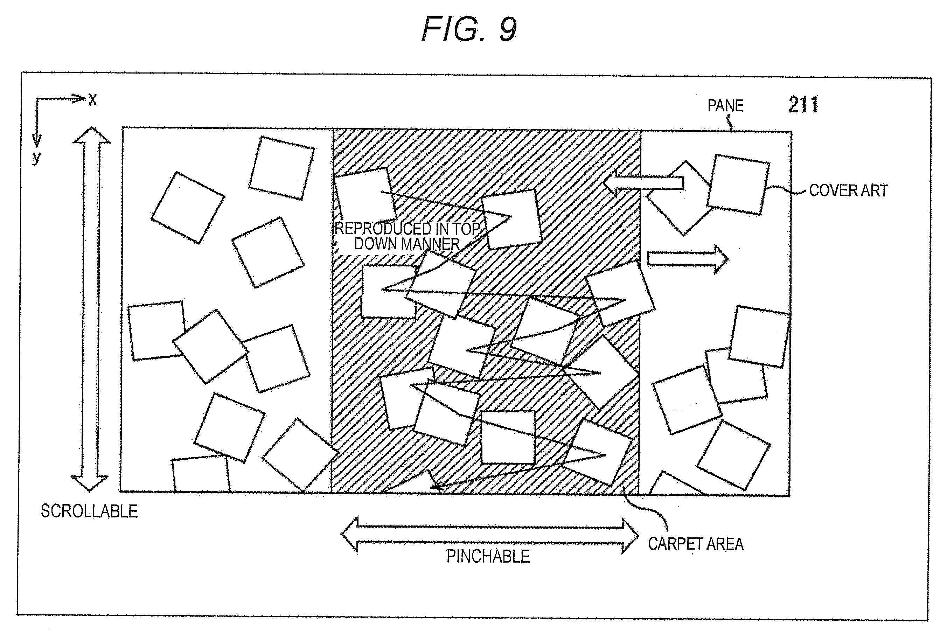

Fig. 9 is a diagram illustrating a display example of the pane 211 of the cover art view in the easy mode.

In the cover art view, the cover arts are arranged on a virtual plane (2-dimensional plane) in a spreading-apart manner, and a display area having the same size as that of the pane 211 is displayed on the pane 211 in the virtual plane as described in conjunction with Figs. 4 and 5.

Here, the display area displayed on the pane 211 in the virtual plane while the cover arts are arranged on the virtual plane as a 2-dimensional plane in a spreading-apart manner is also referred to as a "fuzzy view screen."

In the easy mode, the fuzzy view screen is displayed on the pane 211. In addition, a carpet area is displayed on the fuzzy view screen. The carpet area is a band-shaped area having a width, for example, extending in the x-direction perpendicular to the y-direction, as a predetermined axis of the fuzzy view screen (further, the virtual plane as a 2-dimensional plane).

In addition, in the easy mode, the (songs of) albums corresponding to (part or overall of) the cover arts included in the carpet area are registered in the playlist as a processing target of the reproduction process as a predetermined process.

Registration of the albums on the playlist is performed, for example, in a top-down manner along the y-direction of the fuzzy view screen as a reproducing sequence.

Therefore, in this case, in the playlist created in the easy mode, the cover arts included in the carpet area are sequentially reproduced from the (song of the) album arranged in an upper side.

In the fuzzy view screen, the cover arts included in the carpet area may be displayed in a different format from that of the cover arts that are not included in the carpet area by highlighting them or the like in order to allow a user to easily recognize them as a reproduction target.

The cover art of the currently playing album out of the cover arts included in the carpet area may be displayed in a different format from that of other cover arts, such as blinking, in order to allow a user to easily recognize that the corresponding album is currently being reproduced.

The (arrangement positions of the) cover arts on the virtual screen (or the fuzzy view screen) may be sorted depending on a predetermined sort key.

In addition, the cover arts on the virtual screen may be sorted along each of the x-direction and the y-direction.

Here, the sorting along the x-direction is also referred to as horizontal sorting, and the sort key used in the horizontal sorting is also referred to as a horizontal sort key (first sort key). In addition, the sorting along the y-direction is also referred to as vertical sorting, and the sort key used in the vertical sorting is also referred to as a vertical sort key (second sort key).

As the vertical sort key, for example, an item convenient to find an album desired by a user, such as the album name or the artist name, maybe employed as described in conjunction with Fig. 5.

The horizontal sort key may include, for example, an item that can narrow down a range, such as the number of times that a user hears the (song of the) album (number of times of reproduction), the last time that a user hears the album (last reproduction date/time), the album release date, and reputation of the album on a website.

However, the vertical sort key or the horizontal sort key is not limited to those described above. That is, the vertical sort key or the horizontal sort key may additionally or alternatively include other items such as a tempo of the song or a tune of the song by analyzing them.

In the easy mode, for example, the albums are sorted according to each of predetermined vertical and horizontal sort keys in response to a user's operation. The cover art is arranged in a position on the virtual plane corresponding to a combination between the sort order of the sorting using the vertical sort key and the sort order of the sorting using the horizontal sort key.

That is, the cover art is arranged in a position on the virtual plane defined by a y-coordinate value corresponding to the sort order of the sorting using the vertical sort key and an x-coordinate value corresponding to the sort order of the sorting using the horizontal sort key.

As described in conjunction with Fig. 5, the arrangement position on the virtual plane where the cover art is arranged may be randomly deviated by a slight distance from the position corresponding to the sort order. In addition, the cover art may be arranged in a position rotated by a random angle. As a result, images of the CDs of the albums can be displayed on the fuzzy view screen such that they are scattered on a table in an offhand manner.

The fuzzy view screen including the carpet area is displayed on the touch screen 101. For the carpet area displayed on the touch screen 101, by applying an operation input of the carpet operation as an operation for the carpet area to the touch screen 101, it is possible to change a position in the x-direction perpendicular to the y-axis.

That is, it is possible to change a width (length in the x-direction) of the carpet area, for example, by performing a pinch gesture for the carpet area displayed on the touch screen 101.

In addition, it is possible to deviate (change) a position of the carpet area in the x-direction, for example, by performing a drag gesture for the carpet area displayed on the touch screen 101.

The cover arts included in the carpet area change by changing a width of the carpet area or a position in the x-direction. As the cover arts included in the carpet area change, the playlist is re-created.

That is, as the width of the carpet area or the position in the x-direction changes, an album of the cover art included in the carpet area anew is added to the playlist anew, and an album of the cover art excluded from the carpet area (getting out of the carpet area) is deleted from the playlist.

For the cover art displayed on the fuzzy view screen, the (arrangement position of the) cover art may move by applying an operation input of the cover art operation (symbol image operation) as an operation for the cover art to the touch screen 101.

That is, the cover art displayed on the touch screen 101 may move by performing, for example, a flick gesture or a drag gesture.

As the cover art moves, the cover art included in the carpet area changes. As the cover art included in the carpet area changes, the playlist is re-created.

That is, in a case where, as the cover art moves, a cover art that has not been included in the carpet area before the movement is included in the carpet area anew after the movement, the album of the cover art is added to the playlist anew.

Meanwhile, in a case where, as the cover art moves, a cover art that has been included in the carpet area before the movement is excluded from the carpet area after the movement, the album of the cover art is deleted from the playlist.

The carpet operation for the carpet area or the cover art operation for the cover art may be performed while the songs registered in the playlist are reproduced. In a case where the cover art of the currently playing album is excluded from the carpet area through the carpet operation or the cover art operation, reproduction of the album whose cover art is excluded from the carpet area stops. Then, for example, the album in the next reproduction order in the playlist starts to reproduce.

Accordingly, a user may perform classification by determining whether or not the corresponding album is to be registered or not in the playlist while a user hears a song (of the album).

Alternatively, the cover art included in the carpet area may change by vertically scrolling the pane 211.

As described above, in the easy mode, the album whose cover art is included in the carpet area is registered in the playlist. The album registered in the playlist is selected as a processing target (reproduction target) of the reproduction process according to the arrangement order of the cover art along the y-axis direction on the fuzzy view screen.

Therefore, a user can easily classify a desired reproduction target album out of a plurality of albums by looking over whether or not the cover art is included in the carpet area on the fuzzy view screen and easily create the playlist where such a desired album is registered.

Since the cover art is displayed on the fuzzy view screen, a user can easily determine whether or not the (song of the) album contains a desired song (the song matching the image included in the playlist to be created) by looking over the corresponding cover art.

In addition, addition of the album to the playlist or deletion of the album from the playlist may be easily performed through a one-step intuitive operation such as a pinch gesture or a drag gesture as the carpet operation for the carpet area or a flick gesture or a drag gesture as the cover art operation for the cover art.

As a result, an album matching the image on the playlist to be created by a user may be easily added to the playlist, or an album that does not match the image may be easily deleted from the playlist. That is, it is possible to easily perform fine adjustment for the albums registered in the playlist.

As a reproduction order of the albums whose cover arts are included in the carpet area, an arrangement order of the cover arts along the y-axis direction (in the ascending order of y-coordinates value) may be employed. Alternatively, a random order may be employed as the reproduction order.

### <Process in Easy Mode>

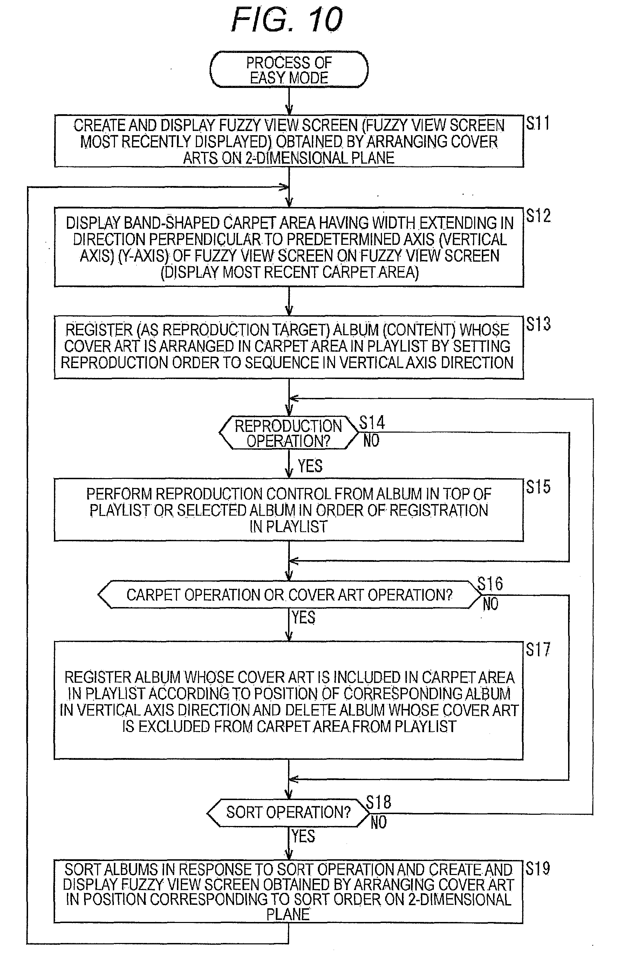

Fig. 10 is a flowchart illustrating a process in the easy mode performed by the content management system of Fig. 8.

In step S11, the display control unit 313 creates the fuzzy view screen obtained by arranging the cover arts on the virtual plane (2-dimensional plane) and causes the fuzzy view screen to display, on the touch screen 101, the cover art view displayed on the pane 211 (Figs. 4 and 5). Then, the process advances to step S12.

Here, in the content management system, in a case where the fuzzy view screen has been displayed in the past, the most recent fuzzy view screen is created in step S11.

Therefore, in a case where a user moves the cover art through the cover art operation, the cover art is displayed in the moved position on the fuzzy view screen.

Meanwhile, in the content management system, in a case where the fuzzy view screen has not been displayed in the past, or an operation input to the touch screen 101 has been made to display a default fuzzy view screen, a fuzzy view screen is created in step S11 such that the albums stored in the content storing unit 312 are sorted according to each of a predetermined default vertical sort key and a predetermined default horizontal sort key, and the cover art is arranged in a position on the virtual plane corresponding to a combination between the sort order of the sorting using the vertical sort key and the sort order of the sorting using the horizontal sort key.

In step S12, the display control unit 313 displays the carpet area having a width extending in the x-direction perpendicular to the y-axis on the fuzzy view screen of the touch screen 101. Then, the process advances to step S13.

Here, in the content management system, in a case where the carpet area has been displayed in the past, the most recent carpet area is displayed without changing the width and the position in step S12.

Therefore, in a case where a user has changed the width or the position of the carpet area through the carpet operation in the past, the changed carpet area is displayed.

Meanwhile, in the content management system, in a case where the carpet area has not been displayed in the past, or an operation input to the touch screen 101 has been made to reset the carpet area, a carpet area having a default width is displayed in a predetermined default position (for example, in the center of the fuzzy view screen) in step S12.

In step S13, the control unit 311 selects, as a reproduction target, the album whose cover art is included in the carpet area out of the albums stored in the content storing unit 312 and registers the album in the playlist by setting the album reproduction order to the arrangement order of the cover art of the reproduction target album along the y-direction.

Then, the process advances from step S13 to step S14. The control unit 311 determines whether or not a reproduction operation for requesting reproduction of the playlist has been made by a user on the touch screen 101.

In step S14, in a case where it is determined that the reproduction operation has not been made, the process skips step S15 and advances to step S16.

In addition, in step S14, if it is determined that the reproduction operation has been made, the process advances to step S15. The control unit 311 controls the reproduction control unit 314 such that the album is reproduced according to the playlist.

As a result, in step S15, the reproduction control unit 314 starts to reproduce the (songs of the) albums stored in the content storing unit 312 according to the playlist.

Here, if it is assumed that the album is registered in the reproduction order of the playlist at that time, and, for example, the album registered in top of the playlist or the cover art included in the carpet area is tapped by a user, the reproduction control unit 314 starts reproduction from the album and the like corresponding to the tapped cover art and reproduces the albums thereafter in the registration order of the playlist.

Alternatively, reproduction of the albums according to the playlist may start without waiting for the reproduction operation from a user.

The reproduction of the albums according to the playlist may performed such that overall songs of an album is reproduced, and then, (overall songs of) the next album starts to be reproduced. Alternatively, the reproduction may be performed such that only one or more songs of the album are randomly reproduced, and then, the next album starts to be reproduced.

In step S16, the control unit 311 determines whether or not a carpet operation or a cover art operation has been made to the touch screen 101.

In step S16, if it is determined that a carpet operation or a cover art operation has not been made, the process skips step S17 and advances to step S18.

In step S16, if it is determined that a carpet operation or a cover art operation has been made, the control unit 311 controls the display control unit 313 such that the display on the touch screen 101 changes depending on the carpet operation or the cover art operation. Then, the process advances to step S17.

The display control unit 313 changes the width or the position of the carpet area or moves the cover art in response to a carpet operation or a cover art operation from a user under control of the control unit 311.

In step S17, in a case where there is a cover art included in the carpet area anew by changing the width or the position of the carpet area or moving the cover art, the control unit 311 registers (adds) the album of the corresponding cover art in the playlist.

In addition, in step S17, in a case where there is a cover art excluded from the carpet area (getting out of the carpet area) by changing the width or the position of the carpet area or moving the cover art, the control unit 311 deletes the album of the corresponding cover art from the playlist. Then, the process advances to step S18.

Here, in step S17, in a case where the album deleted from the playlist is the currently playing album, the control unit 311 controls the reproduction control unit 314 such that the corresponding album stops to reproduce, and the next album on the playlist (the album next to the stopped album in the reproduction order) starts to reproduce.

In addition, in step S17, the album is added to the playlist such that the reproduction order of the corresponding albummatches the position of the cover art of the corresponding album in the y-direction.

In step S18, the control unit 311 determines whether or not a sort operation for selecting the vertical sort key or the horizontal sort key has been made by a user on the touch screen 101.

In step S18, if it is determined that the sort operation has not been made, the process returns to step S14, and the same processes are repeated thereafter.

Otherwise, in step S18, if it is determined that the sort operation has not been made, the process advances to step S19. In step S19, the display control unit 313 sorts the albums stored in the content storing unit 312 according to the vertical sort key or the horizontal sort key selected through the sort operation and creates a fuzzy view screen where the cover art is arranged in a position on the virtual plane corresponding to a combination between the sort order of the sorting using the vertical sort key and the sort order of the sorting using the horizontal sort key.

In addition, the display control unit 313 displays the corresponding fuzzy view screen on the pane 211 of the cover art view (Figs. 4 and 5). Then, the process returns to step S12, and the same processes are repeated thereafter.

As described above, in the content management system, the albums stored in the content storing unit 312 are sorted according to the vertical sort key or the horizontal sort key, and a fuzzy view screen is created and displayed such that the cover art is arranged in a position on the virtual plane corresponding to a combination between the sort order of the sorting using the vertical sort key and the sort order of the sorting using the horizontal sort key.

In addition, a band-shaped carpet area having a width extending in the x-direction is displayed on the fuzzy view screen, and the album whose cover art is included in the carpet area is registered in the playlist.

In addition, the width or the position of the carpet area may change, or the cover art may move in response to a user's operation.

Therefore, in the content management system, the albums stored in the content storing unit 312 are classified to some extent through the sorting using the vertical sort key or the horizontal sort key to make it easy to find a desired album. Therefore, a user can easily classify the content to be registered in the playlist out of the albums stored in the content storing unit 312 just by performing a simple operation such as changing the width or the position of the carpet area or moving the cover art.

In addition, the vertical sort key or the horizontal sort key may be selected by a user. Therefore, a user can rapidly find a desired album by appropriately selecting the vertical sort key or the horizontal sort key, for example, compared to a case where a desired album is selected by rummaging CDs as actual albums.

The content management systemdescribedabove is useful, for example, when a user wants to change a BGM (Back Ground Music) played depending on a feeling or a particular period of time and when a user wants to easily create the playlist of the BGM.

In the channel type application (that manages songs) of the related art described above, for example, a user can select a parameter such as a tune in a 2-dimensional graph so that the songs are classified into a group called a channel depending on the corresponding parameter.

In the channel type application, icons representing each channel are displayed. However, just by seeing an icon, it is difficult to identify whether or not the imaged song is classified into the channel represented by the corresponding icon when a user selects a parameter.

On the contrary, according to the present technology, it is possible to easily recognize whether or not an album represented by a cover art is registered in a playlist (selected as a reproduction target) based on whether or not the corresponding cover art is included in the carpet area.

While description has been made hereinbefore for a case where an album (song) is employed as the content, the content may additionally or alternatively include a moving picture, a still image, an electronic book, and the like.

In a case where amovingpicture is employed as the content, a symbol image serving as a symbol representing the moving picture may include a thumbnail of a still image of one of scenes in the corresponding moving picture, a thumbnail of an image provided on a package of a recording medium such as a blue ray disc where the corresponding moving picture is recorded, and the like.

In a case where a still image is employed as the content, a symbol image serving as a symbol representing the still image may include a thumbnail of the corresponding image and the like. In addition, as a sort key for the still image, for example, a photographing date/time of the still image or a degree of smile (smile face grade) of an object taken on the still image may be employed. Furthermore, out of the still images, the still image whose symbol image is included in the carpet area may be set to, for example, a slide show target. Moreover, for the still images, in a case where the tablet device has, for example, a pair of touch screens 101 as illustrated in Figs. 2A and 2B, the (cover art view including the) fuzzy view screen illustrated in Fig. 9 may be displayed on one of a pair of the touch screens 101, and a slide show of the still images whose symbol images are included in the carpet area may be displayed on the other touch screen 101.

In a case where an electronic book is employed as the content, a symbol image serving as a symbol representing the electronic book may include a thumbnail of a cover page of the corresponding electronic book and the like. In addition, out of the electronic books, an electronic book whose symbol image is included in the carpet area may be set to, for example, a reading target using a synthesized sound.

Here, in the present specification, the processes executed by a computer (CPU 102) according to a program are not necessarily performed in a time-series manner according to the sequence described in the flowchart. That is, the processes executed by a computer according to a program also include a process executed in parallel or individually (for example, including a parallel process or an object process).

The program may be processed by a single computer (processor) or may be processed in a distributed manner using a plurality of computers. Furthermore, the program may be transmitted to and executed by a remote computer.

Embodiments of the present technology are not limited to those described above. Various changes may be possible without departing from the spirit and scope of the present technology.

That is, application of the present technology is not limited to a terminal having a touch screen. The present technology may be applied to other apparatuses capable of controlling image display such as a mobile terminal that does not have a touch screen, a desktop type PC (Personal Computer), a notebook, and a TV (television set).

The present technology may have the following configurations.
[1] An information processing apparatus including a display control unit that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane,
   wherein a content whose symbol image is included in the carpet area is regarded as a processing target of a predetermined process.
[2] The information processing apparatus according to [1], wherein the display control unit sorts the content according to a first sort key and a second sort key, and arranges the symbol image of the content in a position on the 2-dimensional plane of the content corresponding to a combination between a sort order of the sorting using the first sort key and a sort order of the sorting using the second sort key.
[3] The information processing apparatus according to [1] or [2], wherein the content whose symbol image is included in the carpet area is regarded as a reproduction target in an arrangement order of the symbol image along the predetermined axis.
[4] The information processing apparatus according to any of [1] to [3], further including a control unit that selects the content whose symbol image is included in the carpet area as the reproduction target.
[5] The information processing apparatus according to any of [1] to [4], wherein the display control unit changes a width of the carpet area or a position in a direction perpendicular to the predetermined axis depending on a carpet operation which is an operation for the carpet area.
[6] The information processing apparatus according to any of [1] to [5], wherein the display control unit moves the symbol image depending on a symbol image operation which is an operation for moving the symbol image.
[7] The information processing apparatus according to any of [1] to [6], wherein the display control unit displays the symbol image and the carpet area on a touch screen.
[8] An information processing method including a display control step that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane,
   wherein a content whose symbol image is included in the carpet area is regarded as a processing target of a predetermined process.
[9] A program that causes a computer to function as an information processing apparatus including a display control unit that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane,
   wherein a content whose symbol image is included in the carpet area is regarded as a processing target of a predetermined process.

### REFERENCE SIGNS LIST

101 Touch screen, 101A Display unit, 101B Position detecting unit, 102 CPU, 103 ROM, 104 RAM, 105 Hard disk, 106 Output unit, 107 Input unit, 108 Communication unit, 109 Drive, 110 I/O interface, 111 Removable recording medium, 201 Window, 211 to 213 Pane, 311 Control unit, 312 Content storing unit, 313 Display control unit, 314 Reproduction control unit

## Claims

1. An information processing apparatus comprising a display control unit that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane,
wherein a content whose symbol image is included in the carpet area is regarded as a processing target of a predetermined process.

2. The information processing apparatus according to claim 1, wherein the display control unit sorts the content according to a first sort key and a second sort key, and arranges the symbol image of the content in a position on the 2-dimensional plane of the content corresponding to a combination between a sort order of the sorting using the first sort key and a sort order of the sorting using the second sort key.

3. The information processing apparatus according to claim 2, wherein the content whose symbol image is included in the carpet area is regarded as a reproduction target in an arrangement order of the symbol image along the predetermined axis.

4. The information processing apparatus according to claim 3, further comprising a control unit that selects the content whose symbol image is included in the carpet area as the reproduction target.

5. The information processing apparatus according to claim 3, wherein the display control unit changes a width of the carpet area or a position in a direction perpendicular to the predetermined axis depending on a carpet operation which is an operation for the carpet area.

6. The information processing apparatus according to claim 3, wherein the display control unit moves the symbol image depending on a symbol image operation which is an operation for moving the symbol image.

7. The information processing apparatus according to claim 3, wherein the display control unit displays the symbol image and the carpet area on a touch screen.

8. An information processing method comprising a display control step that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane,
wherein a content whose symbol image is included in the carpet area is regarded as a processing target of a predetermined process.

9. A program that causes a computer to function as an information processing apparatus including a display control unit that performs display control for displaying a screen where a symbol image serving as a symbol representing a content is arranged on a 2-dimensional plane and a carpet area which is a band-shaped area having a width extending in a direction perpendicular to a predetermined axis of the 2-dimensional plane,
wherein a content whose symbol image is included in the carpet area is regarded as a processing target of a predetermined process.
